# EUROPÄISCHE PATENTSCHRIFT

(11) **EP 1 564 403 B1**
(45) Veröffentlichungstag und Bekanntmachung des Hinweises auf die Patenterteilung: **17.12.2014**
(21) Anmeldenummer: 05100439.8
(22) Anmeldetag: 25.01.2005
(51) Int. Cl.: F02N 11/08, B60W 10/06, B60W 20/00

(54) **Verfahren zum Betreiben einer Brennkraftmaschine**
Method for operating an internal combustion engine
Procédé de commande d'un moteur à combustion interne

(30) Priorität: 12.02.2004 DE 102004006991
(43) Veröffentlichungstag der Anmeldung: 17.08.2005
(73) Patentinhaber: Volkswagen Aktiengesellschaft, 38440 Wolfsburg (DE)
(72) Erfinder: ZILLMER, Michael, 38173, Sickte (DE); HOLZ, Matthias, 38165, Lehre (DE); POTT, Ekkehard, 38518, Gifhorn (DE); PROCHAZKA, David, 50745, Libosovice (CZ)
(74) Vertreter: Kandlbinder, Markus Christian

(56) Entgegenhaltungen:
- EP-A1- 1 316 460
- US-A- 5 826 671
- US-A1- 2002 017 261

## Beschreibung

Die Erfindung betrifft ein Verfahren zum Betreiben einer Brennkraftmaschine eines Kraftfahrzeuges, insbesondere eines Hybridfahrzeugs, wobei während des Betriebs des Kraftfahrzeugs bei Eintritt wenigstens einer vorbestimmten ersten Bedingung ein Stopp-Betrieb für die Brennkraftmaschine angefordert wird, bei dem die Brennkraftmaschine gestoppt wird, und bei Eintritt wenigstens einer vorbestimmten zweiten Bedingung die Brennkraftmaschine unabhängig von einer Drehmomentanforderung durch einen Fahrer wieder gestartet und/oder bei Eintritt wenigstens einer vorbestimmten zweiten Bedingung ein Wiederstart der Brennkraftmaschine unabhängig von einer Drehmomentanforderung durch einen Fahrer angefordert wird, gemäß dem Oberbegriff des Patentanspruchs 1.

Während des Betriebes eines Kraftfahrzeuges mit Brennkraftmaschine wird diese in den Stillstandsphasen in der Regel nicht abgestellt und läuft im Leerlaufbetrieb weiter. Ein Teil der hier von der Brennkraftmaschine abgegebenen Energie wird für die Versorgung des elektrischen Bordnetzes des Kraftfahrzeuges bzw. für Komfortfunktionen, wie beispielsweise eine Klimaanlage, genutzt. Da der Motor im Leerlaufbetrieb jedoch den größten Anteil der in der eingebrachten Kraftstoffmenge enthaltenen Energie für die Aufrechterhaltung des Motorlaufs bzw. zur Kompensation der Wärme- und Reibungsverluste benötigt und dabei zusätzlich in einem Bereich thermodynamisch schlechter Wirkungsgrade läuft, ist es energetisch ungünstig, den Motor bei Stillstand des Fahrzeugs weiterlaufen zu lassen. Aus diesem Grund gibt es bereits Fahrzeuge mit so genannter Start-Stopp-Funktion, die die Brennkraftmaschine bei einem Fahrzeugstillstand zur Absenkung des Kraftstoffverbrauchs abstellt bzw. in einen Stopp-Betrieb umschaltet.

Auch bei Hybridfahrzeugen, welche sowohl eine Brennkraftmaschine als auch eine E-Maschine enthalten, wird die Brennkraftmaschine in Stillstandsphasen über eine Start-Stopp-Funktion typischerweise abgestellt. Dabei ist hier von Vorteil, dass Hybridfahrzeuge über im Vergleich zu einem konventionellen Anlasser deutlich leistungsstärkere Elektromotoren verfügen, was einen höheren Komfort insbesondere bei Motorstart ermöglicht. Die Anbindung der E-Maschine an die Motorkurbelwelle kann auf verschiedene Arten erfolgen. So kann diese über eine Kupplung bzw. direkt mit der Kurbelwelle des Motors verbunden oder über einen Riementrieb bzw. ein Getriebe angekoppelt sein.

Aus der DE 100 38 280 A1 ist eine automatische Maschinenstart/stoppvorrichtung bekannt, welche in Abhängigkeit von Fahrzuständen eines Hybridkraftfahrzeuges mit zusätzlicher E-Maschine eine Brennkraftmaschine des Hybridkraftfahrzeuges automatisch stoppt oder wieder startet. Die Vorrichtung bestimmt einen Ladezustand der Batterie (SOC - State Of Charge) und lässt ein Stoppen der Brennkraftmaschine nur dann zu, wenn der Ladezustand SOC einen vorbestimmten Wert überschreitet, welcher sicherstellt, dass ausschließlich mit der E-Maschine wieder angefahren werden kann bzw. dass eine Minderung der Batterierestladung in kurzer Zeitdauer verhindert ist. Weiterhin wird der Stopp-Betrieb unterdrückt, wenn die Kühlwassertemperatur einen vorbestimmten Temperaturwert unterschreitet, wobei der vorbestimmte Temperaturwert in Abhängigkeit von der Umgebungstemperatur gewählt wird. Mit höherer Umgebungstemperatur wird ein niedrigerer vorbestimmter Temperaturwert gewählt. Dies soll verhindern, dass ein Katalysator während des Stopp-Betriebs so stark auskühlt, dass es zu erhöhten Schadstoffwerten im Abgas nach dem Wiederstart der Brennkraftmaschine kommt. Bei vom Fahrer aktivierter Klimaanlage wird der Stopp-Betrieb immer unterdrückt, wenn die Umgebungstemperatur unterhalb einer vorbestimmten ersten Temperaturschwelle und oberhalb einer vorbestimmten zweiten Temperaturschwelle liegt, um den Komfort im Innenraum des Fahrzeugs nicht zu beeinträchtigen. Befindet sich die Umgebungstemperatur zwischen der ersten und zweiten Temperaturschwelle, so wird der Stopp-Betrieb unterdrückt, wenn sich die Kühlwassertemperatur unterhalb einer vorbestimmten Temperaturschwelle befindet. Eine Vorhersage einer voraussichtlichen Zeitdauer, nach der eine Bedingung eintritt, die während des Stopp-Betriebs zu einem erzwungenen Wiederstart der Brennkraftmaschine führt, ist in DE 100 38 280 A1 jedoch nicht offenbart.

US 2002/017261 beschreibt somit ein Verfahren nach dem Oberbegriff des Anspruchs 1.

Der Erfindung liegt die Aufgabe zugrunde, ein Verfahren der o.g. Art bzgl. Lebensdauer elektrischer Energiespeicher, Komfort im Fahrgastraum, Schadstoffemissionsverhalten und Kraftstoffverbrauch zu verbessern.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verfahren der o.g. Art erfindungsgemäß vorgesehen, dass bei einer Anforderung des Stopp-Betriebes für wenigstens eine zweite Bedingung eine Zeitspanne bestimmt wird, nach welcher diese zweite Bedingung nach Aktivierung des Stopp-Betriebes voraussichtlich eintreten und zum Wiederstart der Brennkraftmaschine und/oder zum Anfordern eines Wiederstarts der Brennkraftmaschine führen wird, und dass die Zeitspanne mit einem vorbestimmten Schwellwert für eine Mindestdauer des Stopp-Betriebes verglichen wird, wobei der Stopp-Betrieb gehemmt wird, wenn wenigstens eine Zeitspanne kürzer als der vorbestimmte Schwellwert ist, und der Stopp-Betrieb zugelassen wird, wenn eine, mehrere oder alle Zeitspannen gleich oder länger als der vorbestimmte Schwellwert sind.

Dies hat den Vorteil, dass durch die Prädiktion einer voraussichtlichen, maximal möglichen Zeitspanne für den Stopp-Betrieb der Brennkraftmaschine und Vergleich mit einer Mindestdauer für den Stopp-Betrieb unnötige Abschaltungen der Brennkraftmaschine vermieden werden, wodurch die Lebensdauer von elektrischen Energiespeichern, der Komfort für Fahrzeuginsassen, Schadstoffemissionen sowie Kraftstoffverbrauch optimiert werden.

Beispielsweise wird die Zeitspanne berechnet, abgeschätzt oder aus einem Kennfeld ausgelesen.

In besonders bevorzugter Weise umfasst die zweite vorbestimmte Bedingung einen minimalen Ladezustand (SOC-Schwelle - State Of Charge) wenigstens eines elektrischen Energiespeichers, insbesondere einer Batterie und/oder eines Speicherkondensators, wobei aus einem aktuellen Ladezustand des elektrischen Energiespeichers zum Zeitpunkt der Anforderung des Stopp-Betriebes und einer elektrischen Leistungsaufnahme eines Bordnetzes des Kraftfahrzeuges bestimmt wird, nach welcher Entladungsdauer eines, mehrerer oder aller elektrischer Energiespeicher bei gestoppter Brennkraftmaschine der betreffende Energiespeicher den minimalen Ladezustand voraussichtlich erreichen wird, wobei diese Entladungsdauer als Zeitspanne für den Vergleich mit dem vorbestimmten Schwellwert für eine Mindestdauer des Stopp-Betriebes gesetzt wird.

Zweckmäßigerweise wird die elektrische Leistungsaufnahme des Bordnetzes des Kraftfahrzeuges dadurch bestimmt, dass von einer momentanen gesamten elektrischen Leistungsaufnahme zum Zeitpunkt der Anforderung des Stopp-Betriebes die elektrische Leistungsaufnahme von solchen elektrischen Verbrauchern, insbesondere Zündung und/oder elektrischen Einspritzventilen, abgezogen wird, die während gestoppter Brennkraftmaschine keine elektrische Leistung verbrauchen.

In besonders vorteilhafter Weise wird für jeden Energiespeicher ein individueller minimaler Ladezustand (SOC-Schwelle bzw. SOC-Grenzwert oder SOH-Grenzwert - "State Of Health") gesetzt.

Zur Optimierung der Lebensdauer der elektrischen Energiespeicher wird bei aktiviertem Stopp-Betrieb ein elektrisches Bordnetz des Kraftfahrzeuges mit einem elektrischen Energiespeicher des Kraftfahrzeuges verbunden, welcher von allen im Kraftfahrzeug vorhandenen Energiespeichern die höchste Zyklusfestigkeit aufweist.

In besonders bevorzugter Weise umfasst die zweite vorbestimmte Bedingung eine minimale Kühlmitteltemperatur eines Kühlmittels der Brennkraftmaschine, wobei aus einer aktuellen Kühlmitteltemperatur zum Zeitpunkt der Anforderung des Stopp-Betriebes und einer aktuellen Umgebungstemperatur zum Zeitpunkt der Anforderung des Stopp-Betriebes bestimmt wird, nach welcher Abkühldauer die Kühlmitteltemperatur bei gestoppter Brennkraftmaschine die minimale Kühlmitteltemperatur voraussichtlich erreichen wird, wobei diese Abkühldauer als Zeitspanne für den Vergleich mit dem vorbestimmten Schwellwert für eine Mindestdauer des Stopp-Betriebes gesetzt wird.

In besonders bevorzugter Weise umfasst die zweite vorbestimmte Bedingung eine minimale Motortemperatur der Brennkraftmaschine, wobei aus einer aktuellen Motortemperatur zum Zeitpunkt der Anforderung des Stopp-Betriebes und einer aktuellen Umgebungstemperatur zum Zeitpunkt der Anforderung des Stopp-Betriebes bestimmt wird, nach welcher Abkühldauer die Motortemperatur bei gestoppter Brennkraftmaschine die minimale Motortemperatur voraussichtlich erreichen wird, wobei diese Abkühldauer als Zeitspanne für den Vergleich mit dem vorbestimmten Schwellwert für eine Mindestdauer des Stopp-Betriebes gesetzt wird.

In besonders bevorzugter Weise umfasst die zweite vorbestimmte Bedingung eine minimale Katalysatortemperatur eines Katalysators in einem Abgasstrang der Brennkraftmaschine, wobei aus einer aktuellen Katalysatortemperatur zum Zeitpunkt der Anforderung des Stopp-Betriebes und einer aktuellen Umgebungstemperatur zum Zeitpunkt der Anforderung des Stopp-Betriebes bestimmt wird, nach welcher Abkühldauer die Katalysatortemperatur bei gestoppter Brennkraftmaschine die minimale Katalysatortemperatur voraussichtlich erreichen wird, wobei diese Abkühldauer als Zeitspanne für den Vergleich mit dem vorbestimmten Schwellwert für eine Mindestdauer des Stopp-Betriebes gesetzt wird.

In besonders bevorzugter Weise umfasst die zweite vorbestimmte Bedingung eine minimale Lufttemperatur im Fahrgastinnenraum des Kraftfahrzeuges, wobei aus einer aktuellen Lufttemperatur im Fahrgastinnenraum zum Zeitpunkt der Anforderung des Stopp-Betriebes und einer aktuellen Umgebungstemperatur zum Zeitpunkt der Anforderung des Stopp-Betriebes bestimmt wird, nach welcher Abkühldauer die Lufttemperatur im Fahrgastinnenraum bei gestoppter Brennkraftmaschine die minimale Lufttemperatur im Fahrgastinnenraum voraussichtlich erreichen wird, wobei diese Abkühldauer als Zeitspanne für den Vergleich mit dem vorbestimmten Schwellwert für eine Mindestdauer des Stopp-Betriebes gesetzt wird. Dies wird optional auch für Luftfeuchte bzw. Luftgüte durchgeführt.

In besonders bevorzugter Weise umfasst die zweite vorbestimmte Bedingung eine maximale Lufttemperatur in einem Fahrgastinnenraum des Kraftfahrzeuges, wobei aus einer aktuellen Lufttemperatur im Fahrgastinnenraum zum Zeitpunkt der Anforderung des Stopp-Betriebes und einer aktuellen Umgebungstemperatur zum Zeitpunkt der Anforderung des Stopp-Betriebes bestimmt wird, nach welcher Aufwärmdauer die Lufttemperatur im Fahrgastinnenraum bei gestoppter Brennkraftmaschine die maximale Lufttemperatur im Fahrgastinnenraum voraussichtlich erreichen wird, wobei diese Aufwärmdauer als Zeitspanne für den Vergleich mit dem vorbestimmten Schwellwert für eine Mindestdauer des Stopp-Betriebes gesetzt wird.

Zur Bestimmung der Abkühldauer bzw. der Aufwärmdauer werden in vorteilhafter Weise zusätzlich geometrische Daten des Kraftfahrzeuges und/oder Wärmekapazitäten des Kraftfahrzeuges berücksichtigt. Bevorzugt wird zur Bestimmung der Abkühldauer bzw. der Aufwärmdauer eine physikalische Modellierung von Wärmetransportvorgängen durchgeführt. Alternativ wird die Abkühldauer bzw. die Aufwärmdauer aus einem Kennfeld ausgelesen, welches empirisch ermittelte Werte enthält.

Die Erfindung wird im folgenden anhand der Zeichnung näher erläutert. Diese veranschaulicht in der einzigen Fig. graphisch eine Prädiktion der Entladungsdauer einer Batterie bis zum Erreichen eines Grenzwertes für den Ladezustand einer Batterie (SOC-Grenzwert - State Of Charge) bei gestoppter Brennkraftmaschine.

Nachfolgend wird das erfindungsgemäße Verfahren beispielhaft anhand eines Kraftfahrzeuges mit Brennkraftmaschine beschrieben. Der Ausdruck "Stopp-Betrieb" bzw. Stopp-Phase" bezeichnet hierbei ein Abschalten der Brennkraftmaschine des Kraftfahrzeuges für eine gewisse Zeit während des bestimmungsgemäßen Gebrauchs des Kraftfahrzeuges. Hiervon zu unterscheiden ist das Abstellen der Brennkraftmaschine durch einen Benutzer, wenn das Kraftfahrzeug geparkt bzw. abgestellt wird und für eine gewisse Zeit nicht betrieben werden soll.

Für die Freigabe des Stopp-Betriebes im leerlaufnahen Bereich sind verschiedene Randbedingungen zu berücksichtigen. So ist beispielsweise eine Stopp-Phase in kurzem zeitlichen Abstand nach einem Motorkaltstart nicht sinnvoll, da gerade in der anfänglichen Motorerwärmungsphase vergleichsweise steile negative Gradienten für den Kraftstoffverbrauch und die Schadstoffemissionen vorliegen. Eine Unterbrechung der Motorerwärmung würde somit den Kraftstoffverbrauch und die Schadstoffrohemissionen der Betriebsphase nach dem Wiederstart erhöhen, weshalb der Stopp-Betrieb erst nach Überschreiten einer bestimmten Kühlmitteltemperaturgrenze sinnvoll ist. Hierbei ist auch zu beachten, dass bei noch nicht warmem Motor die Energie für den Startvorgang höher ist und dieser aufgrund kalter Saugrohr- und Brennraumwände mit zusätzlichen Schadstoffemissionen verbunden ist. In diesem Zusammenhang kann bei geringeren Außentemperaturen auch die Gewährleistung einer ausreichenden Heizleistung des Fahrgastinnenraumes über den Luft-Kühlmittel-Wärmetauscher dazu führen, dass insbesondere bei noch geringen Motorkühlmitteltemperaturen ein Stopp-Betrieb nicht zugelassen wird.

Ein weiterer Aspekt bezüglich der Freigabe des Stopp-Betriebes ergibt sich bei der Verwendung einer Klimaanlage. Bei einem mechanisch, beispielsweise über einen Riementrieb des Verbrennungsmotors, angetriebenen Klimakompressor muss die Brennkraftmaschine im Leerlauf weiter betrieben werden, um die Funktion der Klimaanlage zu gewährleisten. Hierbei ist es unter anderem denkbar, in Abhängigkeit von der aktuellen Fahrgastrauminnentemperatur und der Außentemperatur die Abschaltung der Klimaanlage und damit auch des Verbrennungsmotors bei Fahrzeugstillstand für eine bestimmte Zeit zuzulassen, beispielsweise wenn die Innentemperatur noch ausreichend gering und die Außentemperatur nicht sehr hoch ist. Liegen jedoch auch hier ungünstige Randbedingungen vor, d. h. ist beispielsweise die Innentemperatur noch nicht weit genug abgesenkt bzw. liegt eine hohe Außentemperatur vor, muss die Klimaanlage und damit die Brennkraftmaschine im Fahrzeugstillstand eingeschaltet bleiben, um den Komfortansprüchen zu genügen.

Des Weiteren muss auch die Abgasreinigungsanlage eine ausreichend hohe Temperatur aufweisen, damit die bei einem Wiederstart der Brennkraftmaschine nach Beendigung des Stopp-Betriebes entstehenden Schadstoffemissionen mit ausreichend hoher Effizienz konvertiert werden können. Dabei sollte insbesondere die so genannte Light-Off-Temperatur des bzw. der Katalysatoren überschritten sein. Auch sollte hier eine nach einem Motorkaltstart gegebenenfalls laufende Maßnahme zur Erhöhung der Katalysatortemperatur nicht durch einen Stopp-Betrieb unterbrochen werden. Ein Problem kann dann entstehen, wenn bei sehr langen Stopp-Phasen die Abgasreinigungsanlage unter die zulässige Temperatur (vorzugsweise Light-Off-Temperatur) auskühlt, da dann der Wiederstart emissionskritisch werden kann. Hierbei ist anzumerken, dass die zulässige Temperaturgrenze für die Abgasreinigungsanlage mit fortschreitender Katalysatoralterung ansteigen kann.

Ein sehr wichtiger Faktor für die Freigabe des Stopp-Betriebes ist der Zustand der elektrischen Energiespeicher, wie beispielsweise Batterie oder Speicherkondensator, da während der Stopp-Phase das elektrische Bordnetz des Kraftfahrzeuges aus dieser bzw. diesem versorgt wird und anschließend ein Motorwiederstart über die E-Maschine (bzw. Anlasser) gewährleistet sein muss. Für eine Freigabe des Stopp-Betriebes muss also der Ladezustand des bzw. der Energiespeicher ausreichend hoch sein, um während der Stopp-Phase den Strombedarf des elektrischen Bordnetzes des Kraftfahrzeuges zu decken. Da sich die Lebensdauer von elektrischen Energiespeichern, wie zum Beispiel Batterien u.a., über die durchgesetzte, d. h. ein- und ausgespeicherte Energie definiert, führt eine Stopp-Phase und die anschließende Ladephase im Fahrbetrieb auch zu einer erhöhten Zyklisierung bzw. zu einer verstärkten Alterung des elektrischen Energiespeichers.

Alternativ kann es bei einem Hybridfahrzeug sinnvoll sein, für das Energiespeichersystem andere Energiespeichertypen zu verwenden. So ist beispielsweise anstelle der Batterie oder zusätzlich zur Batterie ein Kondensatorspeicher vorgesehen, der praktisch unbegrenzt zyklisch belastbar ist. Der Nachteil eines Kondensatorspeichers gegenüber einer Batterie liegt vor allem in der bezogen auf das Volumen erheblich geringeren einspeicherbaren Energie (Energiedichte). Das bedeutet, dass ein Kondensatorspeicher aufgrund des in einem Kraftfahrzeug nur begrenzt vorhandenen Bauraumes im Belastungsfall eine zu Batterien vergleichsweise geringe Energiemenge zur Verfügung stellen kann.

Bei parallelem Einsatz einer Batterie und eines Kondensatorspeichers können die Vorteile beider Energiespeicher kombiniert werden, sodass der Großteil der zyklischen Energieein- und -ausspeichervorgänge über den Kondensatorspeicher abgewickelt und nur bei den nur selten vorkommenden, langandauernden elektrischen Belastungsphasen die Batterie herangezogen wird. Das bedeutet, dass die Versorgung des elektrischen Bordnetzes des Kraftfahrzeugs in den Stopp-Phasen vorzugsweise über den Kondensatorspeicher vorgenommen wird und erst bei Erschöpfung dieser Energiequelle auf die Batterie übergegangen wird. Hierdurch kann die Batterielebensdauer im Fahrbetrieb erheblich verlängert werden.

Wie oben dargestellt, können verschiedene Gründe dazu führen, dass der Stopp-Betrieb für die Brennkraftmaschine bei einem Fahrzeugstillstand nicht zugelassen wird. Darüber hinaus können sich die Randbedingungen während einer Stopp-Phase ändern, so dass ein Wiederstart des Motors sinnvoll bzw. erforderlich wird. Derartige Bedingungen, die bei Eintritt zu einem Wiederstart der Brennkraftmaschine während einer Stopp-Phase und/oder zu einer Anforderung eines Wiederstarts der Brennkraftmaschine führen, werden hier als "zweite Bedingungen" bezeichnet, während "erste Bedingungen" bei Eintritt zu einer Anforderung der Stopp-Phase während eines Betriebs der Brennkraftmaschine führen. Da eine unter Umständen nur sehr kurz andauernde Stopp-Phase energetisch und auch aufgrund der Schadstoffemissionsspitzen beim Wiederstart nicht sinnvoll ist, sollte, solange kein Fahrerwunsch für einen Wiederstart bzw. Wiederaufnahme der Fahrt besteht, die Stopp-Phase eine bestimmte Mindestzeitdauer andauern. Zudem können kurzzeitig aufeinander folgende Wechsel zwischen Stopp-Phase und Wiederstart der Brennkraftmaschine zu einer Komfortbeeinträchtigung führen. Die zweite Bedingung führt nicht notwendigerweise alleine zum Wiederstart der Brennkraftmaschine. Beispielsweise erfolgt der Wiederstart der Brennkraftmaschine bei einem Handschaltgetriebe nur dann, wenn gleichzeitig zur zweiten Bedingung der Fahrer die Bremse und/oder Kupplung tritt. Bei einem Automatikgetriebe kann die zweite Bedingung zum Wiederstart der Brennkraftmaschine ausreichend sein.

Um bereits vor der Einleitung einer Stopp-Phase zu entscheiden, ob diese trotz Anforderung beispielsweise aufgrund eines Fahrzeugstillstands wegen des Eintritts einer zweiten Bedingung voraussichtlich eine sinnvolle Mindestzeit andauert, wird erfindungsgemäß vorgeschlagen, bzgl. relevanter Parameter (zweite Bedingungen), die eine Nichtzulassung bzw. Unterbrechung der Stopp-Phase bewirken können, in einem Steuergerät, vorzugsweise einem Motor- oder Hybridsteuergerät, Prädiktionsrechnungen bzw. -bestimmungen durchzuführen und die Freigabebedingung für die Stopp-Phase mit dem Ergebnis der Berechnung zu verknüpfen. Hierbei ist die Freigabebedingung eine Mindestzeit für die Stopp-Phase und das Ergebnis der Berechnung bzw. Bestimmung ist eine voraussichtliche Zeitdauer, bis die entsprechende zweite Bedingung voraussichtlich eintritt.

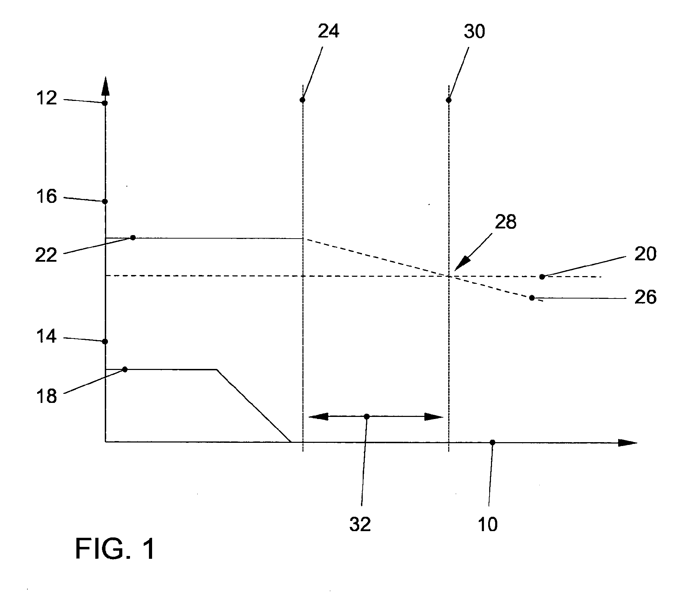

Ist beispielsweise die momentane Leitungsaufnahme des Bordnetzes bekannt, kann auf Basis dieses Wertes und des SOC-Wertes (SOC - State Of Charge) des/der Energiespeicher(s) sowie ggf. weiterer Größen, wie Leitungswiderstand und Wirkungsgrade in den Energiewandlerketten, wie beispielsweise DC/DC-Wandler, errechnet werden, für welche Zeitspanne das elektrische Bordnetz des Kraftfahrzeuges aus den/dem Energiespeichern voraussichtlich versorgt werden kann, bis eine kritische SOC-Schwelle eines oder mehrere Energiespeicher erreicht wird. Dies ist graphisch in der einzigen Fig. veranschaulicht. Auf der horizontalen Achse 10 ist die Zeit und auf der vertikalen Achse 12 ist bei 14 eine Fahrzeuggeschwindigkeit vfzg und bei 16 ein aktueller SOC-Wert für eine Batterie des Kraftfahrzeugs aufgetragen. Ein Graph 18 zeigt den Verlauf der Fahrzeuggeschwindigkeit vfzg 14 über die Zeit und eine gestrichelte Linie 20 zeigt einen vorbestimmten SOC-Grenzwert, wobei der SOC-Grenzwert eine zweite Bedingung zum Wiederstart der Brennkraftmaschine während einer Stopp-Phase darstellt und ein Unterschreiten dieses SOC-Grenzwertes 20 den Eintritt dieser zweiten Bedingung bedeutet. Eine durchgezogene Linie 22 repräsentiert einen aktuellen SOC-Wert. Wie aus dem Verlauf der Fahrzeuggeschwindigkeit vfzg 14 ersichtlich, stoppt das Fahrzeug und zum oder kurz vor dem Zeitpunkt 24 wird wegen des Stillstands des Fahrzeugs als erste Bedingung eine Stopp-Phase angefordert. Erfindungsgemäß wird nun vor der Freigabe des Stopp-Betriebs aus dem aktuellen SOC-Wert 22 zum Zeitpunkt 24 der Anforderung der Stopp-Phase und einer voraussichtlichen Stromaufnahme des elektrischen Bordnetzes des Kraftfahrzeuges die gestrichelte Linie 26 bestimmt, welche einen Abfall des SOC-Wertes über die Zeit aufgrund der Entladung der Batterie /Kondensatorspeicher nach Stoppen der Brennkraftmaschine repräsentiert. Es kann hierdurch ein Zeitpunkt 30 an einem Schnittpunkt 28 des abfallenden SOC-Wertes 26 mit dem SOC-Grenzwert 22 bestimmt werden, an dem voraussichtlich die zweite Bedingung "SOC-Grenzwert unterschritten" eintritt, was zum Wiederstart der Brennkraftmaschine führen würde bzw. zur Anforderung des Wiederstarts der Brennkraftmaschine führen würde. Somit ergibt sich eine voraussichtliche bzw. präzidierte Zeitspanne 32 für den Stopp-Betrieb vom Zeitpunkt 24 bis zum Zeitpunkt 30. Diese Zeitspanne 32 wird mit der vorbestimmten Mindestzeit für die Stopp-Phase verglichen. Falls die Zeitspanne 32 größer oder gleich der Mindestzeit für die Stopp-Phase ist, so wird der Stopp-Betrieb freigegeben und die Brennkraftmaschine abgestellt bzw. gestoppt. Falls jedoch die Zeitspanne 32 kürzer als die Mindestzeit für die Stopp-Phase ist, so wird der Stopp-Betrieb nicht freigegeben und die Brennkraftmaschine trotz Fahrzeugstillstand nicht abgeschaltet, sondern im Leerlauf weiter betrieben, um ein unzulässiges Entleeren des bzw. der Energiespeicher zu vermeiden.

Das Energiespeichersystem kann eine oder mehrere Batterien, einen oder mehrere Speicherkondensatoren oder eine Kombination von wenigstens einer Batterie und wenigstens einem Speicherkondensator umfassen. Zweckmäßigerweise wird dann für jeden Energiespeicher ein eigener sinnvoller SOC-Grenzwert vorbestimmt sein. Vorzugsweise wird die Energieversorgung im Stopp-Betrieb zunächst aus dem höher zyklusfesten Energiespeicher abgewickelt und erst wenn dieser leer ist, wird auf den weniger zyklusfesten Energiespeicher umgeschaltet.

Da sich die Stromaufnahme des Bordnetzes des Kraftfahrzeuges während der Stopp-Phase durch Zu- oder Abschalten elektrischer Verbraucher ändern kann, ist optional vorgesehen, bekannte Änderungen der Stromaufnahme des Bordnetzes des Kraftfahrzeuges aufgrund des Abschaltens der Brennkraftmaschine zu berücksichtigen bzw. in die Prädiktionsrechnung mit einzubeziehen. So werden beispielsweise eine Zündung oder elektrische Einspritzventile in Stopp-Phasen keine elektrische Energie verbrauchen, so dass die Stromaufnahme des Bordnetzes des Kraftfahrzeuges während der Stopp-Phase geringer ist als zum Zeitpunkt der Anforderung der Stopp-Phase, bei dem die Brennkraftmaschine noch in Betrieb ist.

In analoger Weise können vor möglichen Stopp-Phasen auch Prädiktionsrechnungen bzw. -bestimmungen für andere Größen, wie beispielsweise Kühlmittel- bzw. Motortemperatur oder Katalysatortemperatur durchgeführt werden. Hierbei wird unter Berücksichtigung der aktuellen Kühlmittel- bzw. Motor- bzw. Katalysatortemperatur, der Wärmekapazität von Kühlmittel bzw. Motor bzw. Katalysator und ggf. einer vorgeschalteten Abgasanlage sowie einer Außen- bzw. Umgebungstemperatur errechnet bzw. bestimmt, wie lange es dauert, bis kritische Temperaturgrenzwerte unterschritten werden. Das Unterschreiten eines vorbestimmten Temperaturgrenzwertes stellt den Eintritt einer zweiten Bedingung dar, der zum Wiederstart der Brennkraftmaschine während einer Stopp-Phase führt und/oder zur Anforderung des Wiederstarts der Brennkraftmaschine führt. Der vorbestimmte Temperaturgrenzwert ist dabei so gewählt, dass beim Wiederstart der Brennkraftmaschine während einer Stopp-Phase nicht zu hohe Schadstoffwerte durch den Vorgang des Startens der Brennkraftmaschine erreicht werden. Alternativ werden die physikalischen Vorgänge in den Prädiktionsrechnungen bzw. -bestimmungen auch detailliert berücksichtigt, wie beispielsweise der konvektive Wärmeübergang an den Bauteilen sowie die Wärmeleitung in den Bauteilen. Werden auf Basis dieser Rechnung Mindestzeitdauern für die Stopp-Phase nicht erreicht, wird der Stopp-Betrieb schon im Vorfeld unterdrückt, d.h. trotz Anforderung, beispielsweise aufgrund eines Fahrzeugstillstands, nicht zugelassen.

Prädiktionsrechnungen bzw. -bestimmungen für die Freigabe des Stopp-Betriebs können auch hinsichtlich der Fahrzeugklimatisierung durchgeführt werden. So wird beispielsweise ein Abstellen der Brennkraftmaschine in Stillstandphasen des Kraftfahrzeugs für eine gewisse Zeit zugelassen, falls der Kühlleistungsbedarf für den Fahrzeuginnenraum bei hohen Umgebungstemperaturen oder der Heizleistungsbedarf für den Fahrzeuginnenraum bei niedrigen Umgebungstemperaturen nur gering ausfällt, d.h. die Umgebungstemperatur ist nicht zu hoch bzw. zu niedrig. Hierbei ist es beispielsweise vorgesehen, auf Basis der aktuellen Lufttemperatur im Fahrgastinnenraum, der Außentemperatur und ggf. geometrischer Daten und Wärmekapazitäten des Fahrzeuges die Lufterwärmung zu berechnen und daraus eine Zeitspanne bis zum Überschreiten zulässiger Werte zu ermitteln. Hierbei ist optional auch eine detaillierte physikalische Modellierung der Wärmetransportvorgänge vorgesehen. Alternativ wird die Berechnung der Innenraumerwärmung über in Fahrzeugvorversuchen empirisch ermittelte Werte durchgeführt, die im Steuergerät abgelegt sind.

Insgesamt wird durch die Erfindung eine vorteilhafte Strategie für den Betrieb eines Kraftfahrzeugs mit Start-Stopp-Funktion zur Verfügung gestellt, die einerseits ein unzulässiges Entladen der elektrischen Energiespeicher mit höherer Wahrscheinlichkeit vermeidet sowie andererseits den Komfort, das Schadstoffemissionsverhalten und den Kraftstoffverbrauch optimiert bzw. verbessert.

## Patentansprüche

1. Verfahren zum Betreiben einer Brennkraftmaschine eines Kraftfahrzeuges, insbesondere eines Hybridfahrzeugs, wobei während des Betriebs des Kraftfahrzeugs bei Eintritt wenigstens einer vorbestimmten ersten Bedingung ein Stopp-Betrieb für die Brennkraftmaschine angefordert wird, bei dem die Brennkraftmaschine gestoppt wird, und bei Eintritt wenigstens einer vorbestimmten zweiten Bedingung die Brennkraftmaschine unabhängig von einer Drehmomentanforderung durch einen Fahrer wieder gestartet und/oder bei Eintritt wenigstens einer vorbestimmten zweiten Bedingung ein Wiederstart der Brennkraftmaschine unabhängig von einer Drehmomentanforderung durch einen Fahrer angefordert wird, **dadurch gekennzeichnet, dass** bei einer Anforderung des Stopp-Betriebes eine Zeitspanne für wenigstens eine zweite Bedingung bestimmt wird, nach welcher diese zweite Bedingung nach Aktivierung des Stopp-Betriebs voraussichtlich eintreten und zum Wiederstart der Brennkraftmaschine und/oder zum Anfordern eines Wiederstarts der Brennkraftmaschine führen wird, und dass die Zeitspanne mit einem vorbestimmten Schwellwert für eine Mindestdauer des Stopp-Betriebes verglichen wird, wobei der Stopp-Betrieb gehemmt wird, wenn wenigstens eine Zeitspanne kürzer als der vorbestimmte Schwellwert ist, und der Stopp-Betrieb zugelassen wird, wenn eine, mehrere oder alle Zeitspannen gleich oder länger als der vorbestimmte Schwellwert sind.

2. Verfahren nach Anspruch 1, **dadurch gekennzeichnet, dass** die Zeitspanne berechnet, abgeschätzt oder aus einem Kennfeld ausgelesen wird.

3. Verfahren nach wenigstens einem der vorhergehenden Ansprüche, **dadurch gekennzeichnet, dass** die zweite vorbestimmte Bedingung das Erreichen eines minimalen Ladezustandes (SOC-Schwelle - State Of Charge) wenigstens eines elektrischen Energiespeichers, insbesondere einer Batterie und/oder eines Speicherkondensators, umfasst, wobei aus einem aktuellen Ladezustand des elektrischen Energiespeichers zum Zeitpunkt der Anforderung des Stopp-Betriebes und einer elektrischen Leistungsaufnahme eines Bordnetzes des Kraftfahrzeuges bestimmt wird, nach welcher Entladungsdauer eines, mehrerer oder aller elektrischer Energiespeicher bei gestoppter Brennkraftmaschine der Energiespeicher den minimalen Ladezustand voraussichtlich erreichen wird, wobei diese Entladungsdauer als Zeitspanne für den Vergleich mit dem vorbestimmten Schwellwert für eine Mindestdauer des Stopp-Betriebes gesetzt wird.

4. Verfahren nach Anspruch 3, **dadurch gekennzeichnet, dass** die elektrische Leistungsaufnahme des Bordnetzes des Kraftfahrzeuges dadurch bestimmt wird, dass von einer momentanen gesamten elektrischen Leistungsaufnahme zum Zeitpunkt der Anforderung des Stopp-Betriebes die elektrische Leistungsaufnahme von solchen elektrischen Verbrauchern, insbesondere Zündung und/oder elektrische Einspritzventile, abgezogen wird, die während gestoppter Brennkraftmaschine keine elektrische Leistung verbrauchen.

5. Verfahren nach Anspruch 3 oder 4, **dadurch gekennzeichnet, dass** für jeden Energiespeicher ein individueller minimaler Ladezustand (SOC-Schwelle) gesetzt wird.

6. Verfahren nach wenigstens einem der vorhergehenden Ansprüche, **dadurch gekennzeichnet, dass** bei aktiviertem Stopp-Betrieb ein elektrisches Bordnetz des Kraftfahrzeuges mit einem elektrischen Energiespeicher des Kraftfahrzeuges verbunden wird, welcher von allen im Kraftfahrzeug vorhandenen Energiespeichern die höchste Zyklusfestigkeit aufweist.

7. Verfahren nach wenigstens einem der vorhergehenden Ansprüche, **dadurch gekennzeichnet, dass** die zweite vorbestimmte Bedingung das Erreichen einer minimalen Kühlmitteltemperatur eines Kühlmittels der Brennkraftmaschine umfasst, wobei aus einer aktuellen Kühlmitteltemperatur zum Zeitpunkt der Anforderung des Stopp-Betriebes und einer aktuellen Umgebungstemperatur zum Zeitpunkt der Anforderung des Stopp-Betriebes bestimmt wird, nach welcher Abkühldauer die Kühlmitteltemperatur bei gestoppter Brennkraftmaschine die minimale Kühlmitteltemperatur voraussichtlich erreichen wird, wobei diese Abkühldauer als Zeitspanne für den Vergleich mit dem vorbestimmten Schwellwert für eine Mindestdauer des Stopp-Betriebes gesetzt wird.

8. Verfahren nach wenigstens einem der vorhergehenden Ansprüche, **dadurch gekennzeichnet, dass** die zweite vorbestimmte Bedingung das Erreichen einer minimalen Motortemperatur der Brennkraftmaschine umfasst, wobei aus einer aktuellen Motortemperatur zum Zeitpunkt der Anforderung des Stopp-Betriebes und einer aktuellen Umgebungstemperatur zum Zeitpunkt der Anforderung des Stopp-Betriebes bestimmt wird, nach welcher Abkühldauer die Motortemperatur bei gestoppter Brennkraftmaschine die minimale Motortemperatur voraussichtlich erreichen wird, wobei diese Abkühldauer als Zeitspanne für den Vergleich mit dem vorbestimmten Schwellwert für eine Mindestdauer des Stopp-Betriebes gesetzt wird.

9. Verfahren nach wenigstens einem der vorhergehenden Ansprüche, **dadurch gekennzeichnet, dass** die zweite vorbestimmte Bedingung das Erreichen einer minimalen Katalysatortemperatur eines Katalysators in einem Abgasstrang der Brennkraftmaschine umfasst, wobei aus einer aktuellen Katalysatortemperatur zum Zeitpunkt der Anforderung des Stopp-Betriebes und einer aktuellen Umgebungstemperatur zum Zeitpunkt der Anforderung des Stopp-Betriebes bestimmt wird, nach welcher Abkühldauer die Katalysatortemperatur bei gestoppter Brennkraftmaschine die minimale Katalysatortemperatur voraussichtlich erreichen wird, wobei diese Abkühldauer als Zeitspanne für den Vergleich mit dem vorbestimmten Schwellwert für eine Mindestdauer des Stopp-Betriebes gesetzt wird.

10. Verfahren nach wenigstens einem der vorhergehenden Ansprüche, **dadurch gekennzeichnet, dass** die zweite vorbestimmte Bedingung das Erreichen einer minimalen Lufttemperatur in einem Fahrgastinnenraum des Kraftfahrzeuges umfasst, wobei aus einer aktuellen Lufttemperatur im Fahrgastinnenraum zum Zeitpunkt der Anforderung des Stopp-Betriebes und einer aktuellen Umgebungstemperatur zum Zeitpunkt der Anforderung des Stopp-Betriebes bestimmt wird, nach welcher Abkühldauer die Lufttemperatur im Fahrgastinnenraum bei gestoppter Brennkraftmaschine die minimale Lufttemperatur im Fahrgastinnenraum voraussichtlich erreichen wird, wobei diese Abkühldauer als Zeitspanne für den Vergleich mit dem vorbestimmten Schwellwert für eine Mindestdauer des Stopp-Betriebes gesetzt wird.

11. Verfahren nach wenigstens einem der vorhergehenden Ansprüche, **dadurch gekennzeichnet, dass** die zweite vorbestimmte Bedingung das Erreichen einer maximalen Lufttemperatur in einem Fahrgastinnenraum des Kraftfahrzeuges umfasst, wobei aus einer aktuellen Lufttemperatur im Fahrgastinnenraum zum Zeitpunkt der Anforderung des Stopp-Betriebes und einer aktuellen Umgebungstemperatur zum Zeitpunkt der Anforderung des Stopp-Betriebes bestimmt wird, nach welcher Aufwärmdauer die Lufttemperatur im Fahrgastinnenraum bei gestoppter Brennkraftmaschine die maximale Lufttemperatur im Fahrgastinnenraum voraussichtlich erreichen wird, wobei diese Aufwärmdauer als Zeitspanne für den Vergleich mit dem vorbestimmten Schwellwert für eine Mindestdauer des Stopp-Betriebes gesetzt wird.

12. Verfahren nach Anspruch 10 oder 11, **dadurch gekennzeichnet, dass** zur Bestimmung der Abkühldauer bzw. der Aufwärmdauer zusätzlich geometrische Daten des Kraftfahrzeuges und/oder Wärmekapazitäten des Kraftfahrzeuges berücksichtigt werden.

13. Verfahren nach wenigstens einem der Ansprüche 10 bis 12, **dadurch gekennzeichnet, dass** zur Bestimmung der Abkühldauer bzw. der Aufwärmdauer eine physikalische Modellierung von Wärmetransportvorgängen durchgeführt wird.

14. Verfahren nach wenigstens einem der Ansprüche 10 bis 12, **dadurch gekennzeichnet, dass** die Abkühldauer bzw. die Aufwärmdauer aus einem Kennfeld ausgelesen wird, welches empirisch ermittelte Werte enthält.

## Claims

1. Method for operating an internal combustion engine of a motor vehicle, in particular of a hybrid vehicle, wherein, when at least one predetermined first condition is met during the operation of the motor vehicle, a stop operation for the internal combustion engine, during which the internal combustion engine is stopped, is requested, and when at least one predetermined second condition is met, the internal combustion engine is restarted independently of a torque request by a driver, and/or when at least one predetermined second condition is met, a restart of the internal combustion engine is requested independently of a torque request by a driver, **characterized in that** when the stop operation is requested, a time period for at least one second condition is determined, after which time period this second condition is expected to occur after activation of the stop operation, and which will lead to the restarting of the internal combustion engine and/or to the requesting of a restart of the internal combustion engine, and **in that** the time period is compared with a predetermined threshold value for a minimum duration of the stop operation, wherein the stop operation is inhibited if at least one time period is shorter than the predetermined threshold value, and the stop operation is permitted if one or more or all of the time periods is/are equal to or longer than the predetermined threshold value.

2. Method according to Claim 1, **characterized in that** the time period is calculated, estimated or read from a characteristic diagram.

3. Method according to at least one of the preceding claims, **characterized in that** the second predetermined condition comprises the reaching of a minimum state of charge (SOC threshold) of at least one electrical energy store, in particular of a battery and/or of a storage capacitor, wherein, on the basis of a current state of charge of the electrical energy store at the time of the requesting of the stop operation and of electrical power consumption of an on-board power system of the motor vehicle, it is determined after which discharge period of one or more or all of the electrical energy stores the energy store is expected to reach the minimum state of charge when the internal combustion engine is stopped, wherein this discharge period is set as a time period for the comparison with the predetermined threshold value for a minimum duration of the stop operation.

4. Method according to Claim 3, **characterized in that** the electrical power consumption of the on-board power system of the motor vehicle is determined **in that** the electrical power consumption of such electrical loads, in particular the ignition and/or electrical injection valves, which subtract no electrical power while the internal combustion engine is stopped, is subtracted from an instantaneous total electrical power consumption at the time of the requesting of the stop operation.

5. Method according to Claim 3 or 4, **characterized in that** an individual minimum state of charge (SOC threshold) is set for each energy store.

6. Method according to at least one of the preceding claims, **characterized in that** when the stop operation is activated, an electrical on-board power system of the motor vehicle is connected to an electrical energy store of the motor vehicle, which energy store has the highest cycle stability of all the energy stores present in the motor vehicle.

7. Method according to at least one of the preceding claims, **characterized in that** the second predetermined condition comprises the reaching of a minimum coolant temperature of a coolant of the internal combustion engine, wherein, on the basis of a current coolant temperature at the time of the requesting of the stop operation and of a current ambient temperature at the time of the requesting of the stop operation, it is determined after which cooling period the coolant temperature is expected to reach the minimum coolant temperature when the internal combustion engine is stopped, wherein this cooling period is set as a time period for the comparison with the predetermined threshold value for a minimum duration of the stop operation.

8. Method according to at least one of the preceding claims, **characterized in that** the second predetermined condition comprises the reaching of a minimum engine temperature of the internal combustion engine, wherein, on the basis of a current engine temperature at the time of the requesting of the stop operation and of a current ambient temperature at the time of the requesting of the stop operation, it is determined after which cooling period the engine temperature is expected to reach the minimum engine temperature when the internal combustion engine is stopped, wherein this cooling period is set as a time period for the comparison with the predetermined threshold value for a minimum duration of the stop operation.

9. Method according to at least one of the preceding claims, **characterized in that** the second predetermined condition comprises the reaching of a minimum catalyst temperature of a catalytic converter in an exhaust train of the internal combustion engine, wherein, on the basis of a current catalyst temperature at the time of the requesting of the stop operation and of a current ambient temperature at the time of the requesting of the stop operation, it is determined after which cooling period the catalyst temperature is expected to reach the minimum catalyst temperature when the internal combustion engine is stopped, wherein this cooling period is set as a time period for the comparison with the predetermined threshold value for a minimum duration of the stop operation.

10. Method according to at least one of the preceding claims, **characterized in that** the second predetermined condition comprises the reaching of a minimum air temperature in a passenger compartment of the motor vehicle, wherein, on the basis of a current air temperature in the passenger compartment at the time of the requesting of the stop operation and of a current ambient temperature at the time of the requesting of the stop operation, it is determined after which cooling period the air temperature in the passenger compartment is expected to reach the minimum air temperature in the passenger compartment when the internal combustion engine is stopped, wherein this cooling period is set as a time period for the comparison with the predetermined threshold value for a minimum duration of the stop operation.

11. Method according to at least one of the preceding claims, **characterized in that** the second predetermined condition comprises the reaching of a maximum air temperature in a passenger compartment of the motor vehicle, wherein, on the basis of a current air temperature in the passenger compartment at the time of the requesting of the stop operation and of a current ambient temperature at the time of the requesting of the stop operation, it is determined after which warming up period the air temperature in the passenger compartment is expected to reach the maximum air temperature in the passenger compartment when the internal combustion engine is stopped, wherein this warming up period is set as the time period for the comparison with the predetermined threshold value for a minimum duration of the stop operation.

12. Method according to Claim 10 or 11, **characterized in that** in order to determine the cooling period or the warming up period, geometric data of the motor vehicle and/or heating capacities of the motor vehicle are additionally taken into account.

13. Method according to at least one of Claims 10 to 12, **characterized in that** in order to determine the cooling period and/or the warming up period, physical modelling of heating transportation processes is carried out.

14. Method according to at least one of Claims 10 to 12, **characterized in that** the cooling period or the warming up period is read out from a characteristic diagram which contains empirically determined values.

## Revendications

1. Procédé de commande d'un moteur à combustion interne de véhicule automobile, notamment d'un véhicule hybride, un fonctionnement en mode arrêt étant demandé pour le moteur à combustion interne pendant le fonctionnement du véhicule automobile en cas de survenue d'au moins une première condition prédéfinie, dans lequel le moteur à combustion interne est arrêté, et le moteur à combustion interne étant redémarré indépendamment d'une demande de couple de rotation par un conducteur en cas de survenue d'au moins une deuxième condition prédéfinie et/ou un redémarrage du moteur à combustion interne étant demandé indépendamment d'une demande de couple de rotation par un conducteur en cas de survenue d'au moins une deuxième condition prédéfinie, **caractérisé en ce qu'**en cas de demande de fonctionnement en mode arrêt, un intervalle de temps relatif à au moins une deuxième condition est défini après lequel cette deuxième condition est entrée de façon prévisionnelle après activation du fonctionnement en mode arrêt et conduit au redémarrage du moteur à combustion interne et/ou à une demande de redémarrage du moteur à combustion interne et que l'intervalle de temps est comparé à une valeur seuil prédéfinie pour une durée minimale de fonctionnement en mode arrêt, le fonctionnement en mode arrêt étant entravé lorsqu'au moins un intervalle de temps est plus court que la valeur seuil prédéfinie et le fonctionnement en mode arrêt étant autorisé lorsqu'un, plusieurs ou tous les intervalles de temps sont supérieurs ou égaux à la valeur seuil prédéfinie.

2. Procédé selon la revendication 1, **caractérisé en ce que** l'intervalle de temps est calculé, estimé ou sélectionné à partir d'une courbe caractéristique.

3. Procédé selon au moins l'une quelconque des revendications précédentes, **caractérisé en ce que** la deuxième condition prédéfinie comprend le fait d'atteindre un état de charge minimale (seuil SOC - State Of Charge) d'au moins un accumulateur d'énergie électrique, notamment d'une batterie et/ou d'un condensateur d'accumulateur, afin de déterminer, à partir d'un état actuel de charge de l'accumulateur d'énergie électrique à l'instant de la demande de fonctionnement en mode arrêt et d'une puissance absorbée d'un réseau de bord du véhicule automobile, après quelle durée de décharge d'un, de plusieurs ou de tous les accumulateurs d'énergie électrique en cas de moteur à combustion interne arrêté, l'accumulateur d'énergie atteindra de façon prévisible l'état de charge minimale, cette durée de décharge étant définie comme intervalle de temps dans la comparaison avec la valeur seuil prédéfinie pour une durée minimale de fonctionnement en mode arrêt.

4. Procédé selon la revendication 3, **caractérisé en ce que** la puissance absorbée du réseau de bord du véhicule automobile est définie **en ce que** la puissance absorbée prélevée par certains récepteurs électriques, notamment l'allumage et/ou les soupapes d'injection électriques, ne consomme aucune puissance électrique en cas de moteur à combustion interne arrêté, parmi une puissance absorbée totale momentanée à l'instant de la demande de fonctionnement en mode arrêt.

5. Procédé selon la revendication 3 ou 4, **caractérisé en ce qu'**un état de charge minimale (seuil SOC) est défini pour chaque accumulateur d'énergie.

6. Procédé selon au moins l'une quelconque des revendications précédentes, **caractérisé en ce qu'**en cas de fonctionnement en mode arrêt activé, un réseau de bord électrique du véhicule automobile est relié à un accumulateur d'énergie électrique du véhicule automobile comportant la plus haute résistance cyclique parmi tous les accumulateurs d'énergie présents dans le véhicule automobile.

7. Procédé selon au moins l'une quelconque des revendications précédentes, **caractérisé en ce que** la deuxième condition prédéfinie comprend le fait d'atteindre une température de moyen de refroidissement minimale d'un moyen de refroidissement du moteur à combustion interne, afin de définir, à partir d'une température actuelle de moyen de refroidissement à l'instant de la demande de fonctionnement en mode arrêt et d'une température ambiante actuelle à l'instant de la demande de fonctionnement en mode arrêt, après quelle durée de refroidissement la température de moyen de refroidissement atteindra de façon prévisible, en cas de moteur à combustion interne arrêté, la température de moyen de refroidissement minimale, cette durée de refroidissement étant définie comme intervalle de temps à comparer avec la valeur seuil prédéfinie pour une durée minimale de fonctionnement en mode arrêt.

8. Procédé selon au moins l'une quelconque des revendications précédentes, **caractérisé en ce que** la deuxième condition prédéfinie comprend le fait d'atteindre une température minimale de moteur du moteur à combustion interne, afin de définir, à partir d'une température de moteur actuelle à l'instant de la demande de fonctionnement en mode arrêt et d'une température ambiante actuelle à l'instant de la demande de fonctionnement en mode d'arrêt, après quelle durée de refroidissement la température de moteur atteindra de façon prévisible, en cas de moteur à combustion interne arrêté, la température minimale de moteur, cette durée de refroidissement étant définie comme intervalle de temps à comparer à la valeur seuil prédéfinie pour une durée minimale de fonctionnement en mode arrêt.

9. Procédé selon au moins l'une quelconque des revendications précédentes, **caractérisé en ce que** la deuxième condition prédéfinie comprend le fait d'atteindre une température minimale de catalyseur d'un catalyseur dans une colonne d'échappement du moteur à combustion interne, afin de définir, à partir d'une température de catalyseur actuelle à l'instant de la demande de fonctionnement en mode arrêt et d'une température ambiante actuelle à l'instant de la demande de fonctionnement en mode arrêt, après quelle durée de refroidissement la température de catalyseur atteindra de façon prévisible, en cas de moteur à combustion interne arrêté, la température minimale de catalyseur, cette durée de refroidissement étant définie comme intervalle de temps à comparer à la valeur seuil prédéfinie pour une durée minimale de fonctionnement en mode arrêt.

10. Procédé selon au moins l'une quelconque des revendications précédentes, **caractérisé en ce que** la deuxième condition prédéfinie comprend le fait d'atteindre une température minimale d'air dans un habitacle du véhicule automobile, afin de définir, à partir d'une température actuelle d'air dans l'habitacle à l'instant de la demande de fonctionnement en mode arrêt et d'une température ambiante actuelle à l'instant de la demande de fonctionnement en mode arrêt, après quelle durée de refroidissement la température d'air de l'habitacle atteindra de façon prévisible, en cas de moteur à combustion interne arrêté, la température minimale d'air dans l'habitacle, cette durée de refroidissement étant définie comme intervalle de temps à comparer à la valeur seuil prédéfinie pour une durée minimale de fonctionnement en mode arrêt.

11. Procédé selon au moins l'une quelconque des revendications précédentes, **caractérisé en ce que** la deuxième condition prédéfinie comprend le fait d'atteindre une température maximale d'air dans un habitacle du véhicule automobile afin de définir, à partir d'une température actuelle d'air dans l'habitacle à l'instant de la demande de fonctionnement en mode arrêt et d'une température ambiante actuelle à l'instant de la demande de fonctionnement en mode arrêt, après quel temps de chauffage la température d'air de l'habitacle atteindra de façon prévisible, en cas de moteur à combustion interne arrêté, la température maximale d'air dans l'habitacle, ce temps de chauffage étant défini comme intervalle de temps à comparer à la valeur seuil prédéfinie pour une durée minimale de fonctionnement en mode arrêt.

12. Procédé selon la revendication 10 ou 11, **caractérisé en ce que** pour définir la durée de refroidissement et/ou le temps de chauffage, on prend en outre en compte les données géométriques du véhicule automobile et/ou les capacités thermiques du véhicule automobile.

13. Procédé selon au moins l'une quelconque des revendications 10 à 12, **caractérisé en ce que** pour définir la durée de refroidissement et/ou le temps de chauffage, on réalise une modélisation physique du processus de transport de chaleur.

14. Procédé selon au moins l'une quelconque des revendications 10 à 12, **caractérisé en ce que** la durée de refroidissement et/ou le temps de chauffage sont sélectionnés à partir d'une courbe caractéristique contenant des valeurs calculées empiriquement.
